# EUROPÄISCHE PATENTSCHRIFT

(11) **EP 3 021 435 B1**
(45) Veröffentlichungstag und Bekanntmachung des Hinweises auf die Patenterteilung: **27.09.2017**
(21) Anmeldenummer: 15306687.3
(22) Anmeldetag: 21.10.2015
(51) Int. Cl.: H02B 1/56, H02B 13/025

(54) **LÜFTUNGSVORRICHTUNG**
VENTILATION DEVICE
DISPOSITIF D'AÉRATION

(30) Priorität: 11.11.2014 DE 102014116473
(43) Veröffentlichungstag der Anmeldung: 18.05.2016
(73) Patentinhaber: Schneider Electric Industries SAS, 92500 Rueil-Malmaison (FR)
(72) Erfinder: El Ouadhane, Harethe, 93053 Regensburg (DE); Zimmerer, Rudolf, 93192 Wald (DE)
(74) Vertreter: Manitz Finsterwald Patentanwälte PartmbB

(56) Entgegenhaltungen:
- EP-A1- 1 059 715
- WO-A1-02/075885
- WO-A1-2013/099393
- DE-A1-102012 218 782

## Beschreibung

Die vorliegende Erfindung betrifft eine Lüftungsvorrichtung nach dem Oberbegriff des Anspruchs 1 für eine Schottwand einer elektrischen Schaltanlage, insbesondere für eine elektrische Schaltanlage der Mittelspannungstechnik. Eine solche Vorrichtung ist aus der EP 1 059 715 A1 bekannt. Eine andere Lüftungsvorrichtung ist aus der DE 10 2012 218 782 A1 bekannt.

Derartige Lüftungsvorrichtungen dienen dazu, einerseits für eine Be- oder Entlüftung eines Schottraums der Schaltanlage zu sorgen und andererseits den für die Be- oder Entlüftung vorgesehenen Durchströmungsquerschnitt zu verschließen, wenn in einem Schottraum aufgrund eines Störfalls eine Druckwelle entsteht. Bei einem solchen Störfall kann es sich beispielsweise um einen Störlichtbogen handeln, bei dem durch einen ungewollten Spannungsüberschlag ein Lichtbogen innerhalb der Schaltanlage entsteht, durch den eine Druckwelle ausgelöst wird, bei der sich heiße Gase mit hoher Geschwindigkeit von dem Schottraum ausbreiten.

Da in elektrischen Schaltanlagen üblicherweise mehrere Schotträume nebeneinander bzw. mittelbar oder unmittelbar benachbart vorgesehen sind, deren Entlüftungsöffnungen in einen gemeinsamen Entlüftungskanal münden, kann es bei Auftreten eines Lichtbogens in einem Schottraum dazu kommen, dass heiße und mit Verschmutzungen versehene Gase über den gemeinsamen Entlüftungskanal in benachbarte Schotträume eindringen, was unerwünscht ist, da in diesem Fall die in den benachbarten Schotträumen vorhandenen elektrischen Anlagen kontaminiert und/oder beschädigt werden.

Es ist die Aufgabe der vorliegenden Erfindung, eine Lüftungsvorrichtung für eine Schottwand einer elektrischen Schaltanlage zu schaffen, die einerseits im Störfall zusätzlich für eine Druckentlastung in einem Schottraum sorgt, die aber auch in der Lage ist, das unerwünschte Eindringen von verschmutzten Gasen zu verhindern.

Die Lösung dieser Aufgabe erfolgt durch die Merkmale des Anspruchs 1 und insbesondere dadurch, dass die Lüftungsvorrichtung eine Abdeckklappe aufweist, die bei einer Druckwelle auf einer Seite der Schottwand einen ersten Durchströmungsquerschnitt der Lüftungsvorrichtung verschließt, und dass an der Lüftungsvorrichtung ein zweiter Durchströmungsquerschnitt vorgesehen ist, der größer als der erste Durchströmungsquerschnitt ist und der sich bei einer Druckwelle auf der anderen Seite der Schottwand öffnet. Die Abdeckklappe ist um eine erste Schwenkachse verschwenkbar, wobei die erste Schwenkachse um eine zweite Schwenkachse verschwenkbar ist, die zu der ersten Schwenkachse beabstandet ist. Es sind somit zwei getrennte und voneinander beabstandete Schwenkachsen vorgesehen, um entweder den ersten Durchströmungsquerschnitt zu verschließen oder aber den zweiten Durchströmungsquerschnitt zu öffnen.

Erfindungsgemäß sind an der Lüftungsvorrichtung zwei unterschiedlich große Durchströmungsquerschnitte vorgesehen, wobei der kleinere Durchströmungsquerschnitt mit Hilfe der Abdeckklappe verschließbar ist und der größere Durchströmungsquerschnitt im Normalbetrieb geschlossen ist und sich erst bei einer Druckwelle öffnet, deren Ausbreitungsrichtung gegensinnig zu einer Druckwelle ist, welche die Abdeckklappe verschließt.

Mit der erfindungsgemäßen Lüftungsvorrichtung wird einerseits eine Abfuhr der in einem Schottraum entstehenden Warmluft durch den ersten Durchströmungsquerschnitt erreicht, der im normalen Betrieb von der Abdeckklappe nicht verschlossen ist. Sollte allerdings in dem Schottraum ein Störfall auftreten, so öffnet die entstehende Druckwelle den zweiten, größeren Durchströmungsquerschnitt, so dass die Druckwelle mit heißen und verunreinigten Gasen in einen Entlüftungskanal austreten kann, ohne dass es zu einer Gefährdung von Personen oder unerwünschten Beschädigungen kommt, da die Druckwelle durch den geöffneten zweiten Durchströmungsquerschnitt rasch aus dem Schottraum in den Entlüftungskanal austreten kann. Mit dem Entlüftungskanal, der als Druckentlastungskanal wirkt, werden die Druckwelle und die heißen, verunreinigten Gasen üblicherweise nach außen abgeleitet. Wenn allerdings in einem anderen Schottraum der Schaltanlage ein Störfall auftritt, so breitet sich von dort eine Druckwelle mit heißen und verunreinigten Gasen in den gemeinsamen Druckentlastungskanal aus, so dass diese Gase an sich unerwünscht in andere Schotträume der Schaltanlage eintreten könnten. Erfindungsgemäß wird dies jedoch durch die den ersten Durchströmungsquerschnitt verschließende Abdeckklappe verhindert, die sich bei Auftreten einer Druckwelle außerhalb des zugehörigen Schottraums verschließt.

Der Entlüftungs- bzw. Druckentlastungskanal kann dabei weitere Druck- und Partikelabsorber beinhalten, die zur Kühlung der Gase verwendet werden. Dadurch kann ein hoher Druck im Entlüftungskanal entstehen, der ohne die erfindungsgemäße Lüftungsvorrichtung das Eindringen der Gase in die nicht betroffenen Schotträume und die Verunreinigung durch Partikel weiter begünstigen würde.

Vorteilhafte Ausführungsformen der Erfindung sind in der Beschreibung, der Zeichnung sowie den Unteransprüchen beschrieben.

Nach einer Ausführungsform kann die Abdeckklappe eine erste Schwenkklappe sein, die an einer zweiten Schwenkklappe verschwenkbar befestigt ist. Bei dieser Ausführungsform kann die zweite Schwenkklappe den größeren Durchströmungsquerschnitt öffnen und sich dabei zusammen mit der ersten Schwenkklappe in eine Öffnungsstellung bewegen, um in dem zugehörigen Schottraum eine rasche Druckentlastung zu bewirken.

Nach einer weiteren vorteilhaften Ausführungsform kann die Abdeckklappe mehrere Durchströmungsöffnungen aufweisen, zwischen denen Stege vorgesehen sind, welche in einer Schließstellung der Abdeckklappe den ersten Durchströmungsquerschnitt verschließen. Die Durchströmungsöffnungen können dabei grundsätzlich eine beliebige Form aufweisen, beispielsweise die Form von Schlitzen oder Löchern, wobei der erste Durchströmungsquerschnitt ebenfalls durch Schlitze, Löcher oder Öffnungen gebildet sein kann. Beispielsweise kann der erste Durchströmungsquerschnitt durch eine Vielzahl von Schlitzen gebildet sein, welche durch Stege an der Abdeckklappe verschlossen werden, wenn diese in ihre Schließstellung bewegt worden ist. Hierzu können an der Abdeckklappe gleichartige Schlitze vorgesehen sein, die jedoch in der Schließstellung der Abdeckklappe derart versetzt zu den Schlitzen des ersten Durchströmungsquerschnitts angeordnet sind, dass dieser bei geschlossener Abdeckklappe verschlossen ist.

Nach einer weiteren vorteilhaften Ausführungsform können an drei Seiten des ersten Durchströmungsquerschnitts Gasführungswände vorgesehen sein, die sich quer zu dem ersten Durchströmungsquerschnitt erstrecken. Durch derartige Gasführungswände können seitliche Druckanteile gezielt kanalisiert werden, um ein rasches und sicheres Schließen der Abdeckklappe zu bewirken. Hierbei hat sich herausgestellt, dass eine dreieckige Ausbildung von zwei Gasführungswänden, insbesondere der beiden seitlichen Gasführungswände, vorteilhaft ist, um ein besonders rasches und sicheres Schließen der Abdeckklappe zu bewirken.

Nach einer weiteren vorteilhaften Ausführungsform kann die Lüftungsvorrichtung als modulares Bauteil ausgebildet sein, das drei Komponenten umfasst, nämlich ein Basisteil, eine an dem Basisteil gelenkig gelagerte Schwenkklappe zum Verschließen des zweiten Durchströmungsquerschnitts, die den ersten Durchströmungsquerschnitt aufweist, sowie die Abdeckklappe, die an der Schwenkklappe gelenkig gelagert ist. Das Basisteil kann hierbei einen Rahmen aufweisen, der den zweiten Durchströmungsquerschnitt umgibt. Es ist jedoch auch möglich, das Basisteil rahmenlos auszubilden. In diesem Fall wird die Lüftungsvorrichtung so in eine an einem Schottraum vorgesehene Öffnung eingesetzt, dass die Schwenkklappe den zweiten Durchströmungsquerschnitt im Normalfall verschließt. Hierbei bildet die Außenkontur der Schwenkklappe die Einhüllende des zweiten Durchströmungsquerschnitts.

Nach einer weiteren vorteilhaften Ausführungsform kann eine Abdeckklappe und/oder eine Schwenkklappe vorgesehen sein, die von Federn und/oder Sollbruchelementen in ihrer Schließstellung oder in ihrer Offenstellung gehalten ist. Auf diese Weise ist gewährleistet, dass die Abdeckklappe oder die Schwenkklappe nach dem Schließen bzw. nach dem Öffnen nicht zurückprallt sondern jeweils in der gewünschten Stellung, nämlich der Schließstellung bei verschlossenem ersten Durchströmungsquerschnitt oder der Offenstellung bei geöffnetem zweiten Durchströmungsquerschnitt verbleibt.

Der zweite Durchströmungsquerschnitt kann um zumindest 20 %, insbesondere um zumindest 30 %, insbesondere um mindestens 50 % größer als der erste Durchströmungsquerschnitt sein.

Für eine kostengünstige Herstellung kann es vorteilhaft sein, wenn die Lüftungsvorrichtung ausschließlich aus Stanzteilen und/oder Stanzbiegeteilen hergestellt ist. Hierbei kann die gelenkige Anbindung der Abdeckklappe und/oder der Schwenkklappe durch in einem Blechzuschnitt vorhandene Perforationen gebildet sein. Auch ist es möglich, die Abdeckklappe und/oder die Schwenkklappe mit Laschen zu versehen, die in korrespondierende Schlitze so eingesteckt werden, dass eine Schwenkbewegung der zugehörigen Klappe möglich ist.

Nach einem weiteren Aspekt der Erfindung betrifft diese eine elektrische Schaltanlage mit zumindest einer Lüftungsvorrichtung der vorstehend beschriebenen Art.

Sofern die elektrische Schaltanlage zumindest zwei Lüftungsvorrichtungen aufweist, kann es vorteilhaft sein, diese in einen Entlüftungskanal derart einzubauen, dass sich die beiden Abdeckklappen zum Verschließen des ersten Durchströmungsquerschnitts gegensinnig schließen. Auf diese Weise ist sichergestellt, dass bei Auftreten einer Druckwelle in einem benachbarten Schottraum andere Schotträume nicht durch verunreinigte Gase kontaminiert werden.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine perspektivische Ansicht einer Lüftungsvorrichtung;
- Fig. 2: eine schematische Seitenansicht einer elektrischen Schaltanlage mit mehreren Schotträumen bei normalem Betrieb;
- Fig. 3: eine der Fig. 2 entsprechende Ansicht mit einem Störfall in einem ersten Schottraum;
- Fig. 4: eine der Fig. 2 entsprechende Ansicht mit einem Störfall in einem zweiten Schottraum;
- Fig. 5: eine der Fig. 2 entsprechende Ansicht mit einem Störfall in einem dritten Schottraum; und
- Fig. 6: eine Seitenansicht einer alternativen Ausführungsform einer elektrischen Schaltanlage.

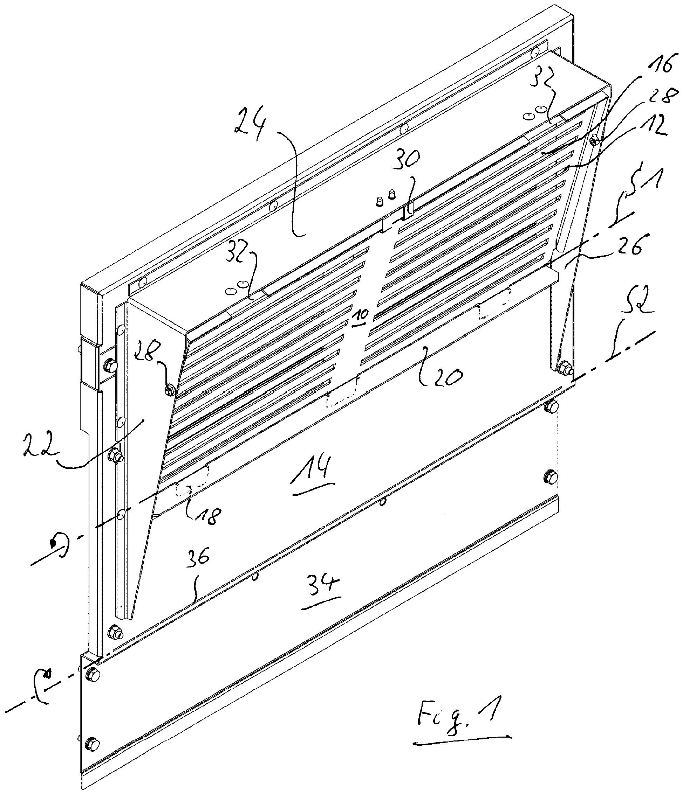

Fig. 1 zeigt perspektivisch eine Lüftungsvorrichtung für eine Schottwand einer elektrischen Schaltanlage, wobei die Lüftungsvorrichtung eine mit Lüftungsschlitzen 12 versehene Abdeckklappe 10 umfasst, mit deren Hilfe ein erster Durchströmungsquerschnitt der Lüftungsvorrichtung verschließbar ist. Der erste Durchströmungsquerschnitt ist dabei durch eine zu den Schlitzen 12 korrespondierende Anzahl von Schlitzen (in Fig. 1 nicht erkennbar) gebildet, die in einer Platte 14 vorgesehen sind, an der die Abdeckklappe 10 gelenkig angeordnet ist. Hierbei sind die Schlitze in der Platte 14 so positioniert, dass diese von den Stegen 16 der Abdeckklappe 10 verschlossen werden, wenn diese um ihre in Fig. 1 mit dem Bezugszeichen S1 bezeichnete Schwenkachse (entgegen dem Uhrzeigersinn) verschwenkt worden ist.

Wie Fig. 1 verdeutlicht, weist die Abdeckklappe 10 an ihrer Unterseite (beim dargestellten Ausführungsbeispiel) drei Laschen 18 auf, die in an einer Abkantung 20 der Klappe 14 vorgesehene Schlitze eingesteckt sind, so dass die Abdeckklappe 10 in einem bestimmten Winkelbereich von beispielsweise etwa 30° um die Schwenkachse S1 verschwenkbar ist.

Für eine optimierte Gasführung sind an drei Seiten des durch die Schlitze 12 und die an der Platte 14 vorgesehenen Schlitze gebildeten ersten Durchströmungsquerschnitts Gasführungswände 22, 24 und 26 vorgesehen, die sich quer zu dem ersten Durchströmungsquerschnitt erstrecken. Hierbei ist die hintere, zu der Schwenkachse S1 parallel beabstandete Gasführungswand 24 rechteckförmig ausgebildet, wohingegen die beiden seitlichen Gasführungswände 22 und 26 dreieckig sind und sich in Richtung der ersten Schwenkachse S1 verjüngen, sich jedoch von der rückseitigen Ausführungswand 24 über die erste Schwenkachse S1 hinaus erstrecken. Um dabei die Abdeckklappe 10 im Normalbetrieb in ihrer in Fig. 1 dargestellten Offenstellung zu halten, ist an den seitlichen Gasführungswänden 22 und 26 jeweils ein Anschlag 28 vorgesehen. Um die Abdeckklappe im Normalbetrieb in jeder Montagestellung in ihrer Offenstellung zu erhalten, sind zusätzliche an der rückseitigen Gasführungswand 24 Federelemente 32 vorgesehen. Wenn sich jedoch die Abdeckklappe entgegen dem Uhrzeigersinn geschlossen hat, so wird diese durch ein weiteres Federelement 30 in ihrer Schließstellung gehalten, um ein Zurückprallen zu verhindern.

Bei der in Fig. 1 dargestellten Lüftungsvorrichtung ist die Platte 14, an der die Abdeckklappe 10 schwenkbar angeordnet ist, selbst als Schwenkklappe ausgebildet, d.h. die Platte 14 kann als Schwenkklappe um eine Schwenkachse S2 entgegen dem Uhrzeigersinn verschwenkt werden, wobei die zweite Schwenkachse S2 zu der ersten Schwenkachse S1 parallel beabstandet ist. Hierzu ist die Lüftungsvorrichtung als modulares Bauteil ausgebildet, das drei Komponenten umfasst, nämlich ein beim dargestellten Ausführungsbeispiel mit der Schwenkklappe 14 einstückig verbundenes Basisteil 34, die an dem Basisteil 34 gelenkig gelagerte Schwenkklappe 14 zum Verschließen eines zweiten Durchströmungsquerschnitts, wobei die Schwenkklappe 14 den durch die vorgesehenen Schlitze gebildeten ersten Durchströmungsquerschnitt aufweist, und die Abdeckklappe 10, die an der Schwenkklappe 14 gelenkig gelagert ist. Der zweite Durchströmungsquerschnitt, der wesentlich größer als der erste Durchströmungsquerschnitt ist, ist hierbei durch die Umhüllende der Schwenkklappe 14 gebildet.

Wenn die Lüftungsvorrichtung in eine Öffnung eines Schottraums bündig eingebaut ist, so verschließt die Schwenkklappe 14 einen ihrer Außenkontur entsprechenden Durchströmungsquerschnitt, der sich dann öffnet, wenn die Schwenkklappe 14 entgegen dem Uhrzeigersinn um die Achse S2 verschwenkt wird. Die Verschwenkbarkeit ist bei dem dargestellten Ausführungsbeispiel dadurch gewährleistet, dass die mit dem Basisteil 34 einstückig verbundene Schwenkklappe 14 mit einer Vielzahl von schlitzartigen Perforationen 36 versehen ist. Auch hier kann die Lüftungsvorrichtung Mittel aufweisen, um die Schwenkklappe 14 sowohl in ihrer in Fig. 1 dargestellten Schließstellung wie auch in ihrer Offenstellung zu halten, in der die Schwenkklappe 14 um die Schwenkachse S2 verschwenkt worden ist.

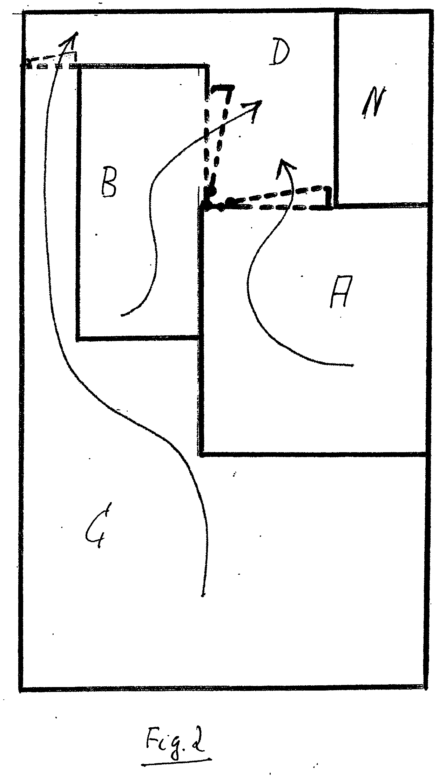

Fig. 2 zeigt eine starke schematische Seitenansicht einer üblichen elektrischen Schaltanlage der Mittelspannungstechnik, in der verschiedene Schotträume A, B und C vorgesehen sind. Beispielsweise kann es sich bei dem Schottraum A um einen Leistungsschalterraum handeln, der Schottraum B kann ein Sammelschienenraum sein und der Schottraum C kann als Kabelanschlussraum benutzt werden. Mit dem Bezugszeichen N ist ein Raum mit Niederspannungsschaltelementen bezeichnet.

Bei dem in Fig. 2 dargestellten Ausführungsbeispiel ist jeder der Schotträume über eine erfindungsgemäße Lüftungsvorrichtung mit einem gemeinsamen Abluftkanal D verbunden. Somit kann - wie in Fig. 2 durch geschwungene Pfeile angedeutet - erwärmte Luft durch Konvektion von den Schotträumen A, B und C in den Abluftkanal D abströmen. Wie zu erkennen ist, kann die erfindungsgemäße Lüftungsvorrichtung in beliebigen Orientierungen in den Schottwänden verbaut werden und in allen Fällen strömt Abluft von dem jeweiligen Schottraum zunächst durch die an der Platte 14 vorgesehenen Lüftungsschlitze, anschließend durch die Lüftungsschlitze 12 der Abdeckklappe 10 und von dort in den Durchströmungskanal D. Im Normalbetrieb befinden sich somit die Abdeckklappen 10 aller Lüftungsvorrichtungen in der in Fig. 1 dargestellten Offenstellung. Gleichzeitig ist jedoch die Schwenkklappe 14, an welcher die Abdeckklappe 10 schwenkbar befestigt ist, in ihrer Schließstellung, so dass der zweite, größere Durchströmungsquerschnitt bis auf den ersten Durchströmungsquerschnitt verschlossen ist.

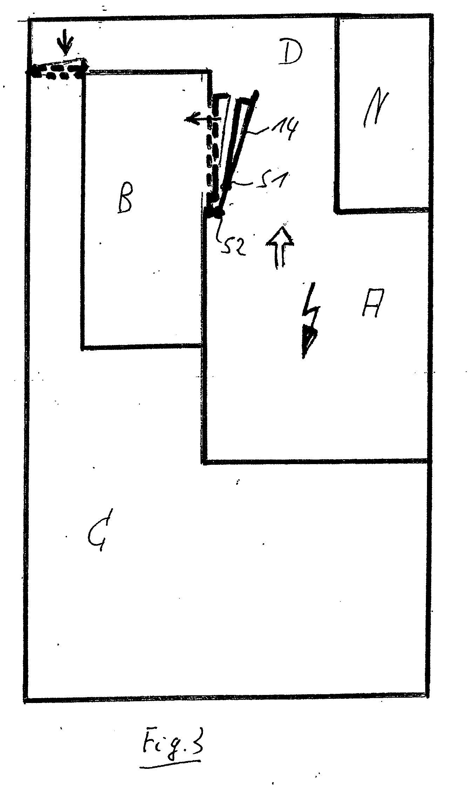

Die Fig. 3 bis Fig. 5 zeigen jeweils die elektrischen Schaltanlagen von Fig. 2, wenn sich in den verschiedenen Schotträumen A, B und C ein Störfall ereignet, was durch einen blitzartigen Pfeil angedeutet ist.

Wie Fig. 3 zeigt, könnte sich in dem Schottraum A ein Störfall ereignen, was dazu führen würde, dass der zweite Durchströmungsquerschnitt der zugehörigen Lüftungsvorrichtung geöffnet wird, indem die Schwenkklappe 14 zusammen mit der Abdeckklappe 10 um die Schwenkachse S2 verschwenkt. Hierdurch können die im Schottraum A entstehenden heißen Gase rasch unter hohem Druck in den Abluftkanal D austreten. Durch diese sich in den Abluftkanal D ausbreitende Druckwelle werden gleichzeitig die Abdeckklappen 10 der Schotträume B und C geschlossen, was jeweils durch Pfeile angedeutet ist, so dass sich die mit Verschmutzungen versehenen Gase nicht in die Schotträume B und C ausbreiten können.

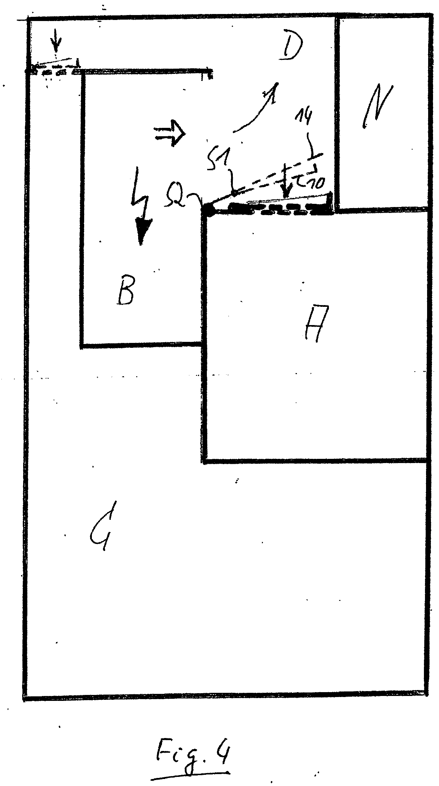

Fig. 4 zeigt eine zu Fig. 3 vergleichbare Situation, wobei allerdings nicht im Schottraum A sondern im Schottraum B ein Störfall auftritt. In diesem Fall öffnet sich die in der Schottwand des Schottraums B befindliche Schwenkklappe 14, indem diese um die Achse S2 verschwenkt, wodurch der zweite, größere Durchströmungsquerschnitt freigegeben wird. Gleichzeitig schließen sich wiederum die Abdeckklappen 10 der beiden anderen Lüftungsvorrichtungen, so dass die Schotträume A und C vor Verunreinigung geschützt sind.

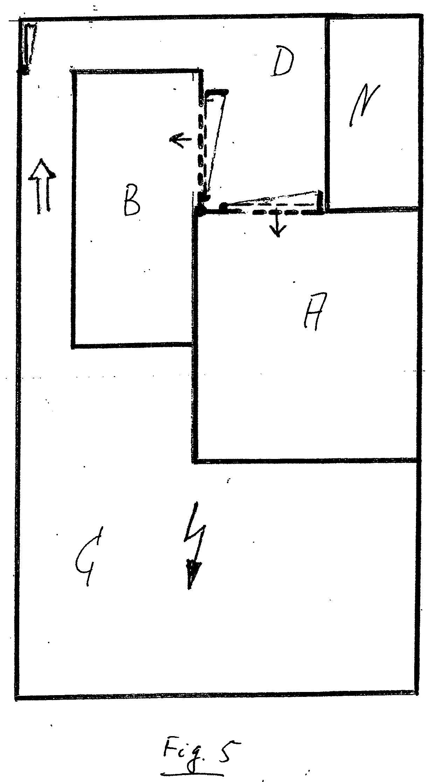

Schließlich zeigt Fig. 5 eine Situation, bei der ein Störfall im Schottraum C auftritt. Auch hier öffnet die Schwenkklappe 14 der zugehörigen Lüftungsvorrichtung den zweiten Durchströmungsquerschnitt, wohingegen die Abdeckklappen 10 der beiden anderen Lüftungsvorrichtungen den ersten Durchströmungsquerschnitt zu den Schotträumen A und B verschließen.

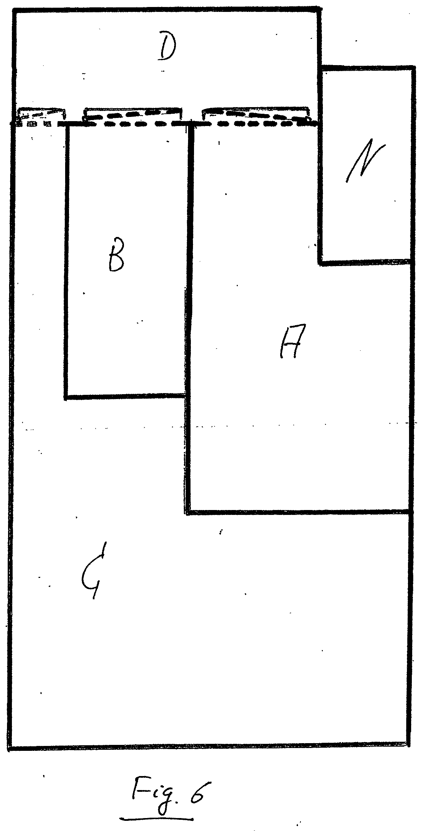

Fig. 6 zeigt eine alternative Ausführungsvariante einer elektrischen Schaltanlage, bei der die Lüftungsvorrichtungen der drei Schotträume A, B und C im Wesentlichen in einer Horizontalebene im unteren Bereich des Entlüftungskanals D angeordnet sind. Wenn in einem der Schotträume A, B oder C ein Störfall auftritt, öffnet die zugehörige Lüftungsvorrichtung den zweiten, größeren Strömungsquerschnitt, woraufhin sich die Lüftungsvorrichtungen aller anderen Schotträume, die über den Entlüftungskanal D in Verbindung stehen, verschließen, so wie dies auch bei den Schaltanlagen der Fig. 2 - 5 der Fall ist.

Bei allen vorstehend beschriebenen Ausführungsformen ist der erste Durchströmungsquerschnitt durch eine Vielzahl von Durchströmungsöffnungen gebildet, wobei sich diese Durchströmungsöffnungen einerseits in der Abdeckklappe 10 und andererseits in der Schwenkklappe 14 befinden. Der zweite Durchströmungsquerschnitt wird jedoch bevorzugt durch eine oder einige wenige Durchströmungsöffnungen gebildet, damit nach Öffnen des zweiten Durchströmungsquerschnitts eine rasche Druckentlastung erfolgen kann.

## Patentansprüche

1. Lüftungsvorrichtung für eine Schottwand einer elektrischen Schaltanlage, umfassend eine Abdeckklappe (10), die bei einer Druckwelle auf einer Seite der Schottwand einen ersten Durchströmungsquerschnitt der Lüftungsvorrichtung verschließt, wobei an der Lüftungsvorrichtung ein zweiter Durchströmungsquerschnitt vorgesehen ist, der größer als der erste Durchströmungsquerschnitt ist und der sich bei einer Druckwelle auf der anderen Seite der Schottwand öffnet, wobei eine Schwenkklappe (14) zum Verschließen des zweiten Durchströmungsquerschnitts vorgesehen ist, die den durch Schlitze (12) gebildeten ersten Durchströmungsquerschnitt aufweist, und wobei die Abdeckklappe (10) um eine erste Schwenkachse (S1) verschwenkbar ist und der zweite Durchströmungsquerschnitt durch die Umhüllende der Schwenkklappe (14) gebildet ist,
**dadurch gekennzeichnet, dass**
die Abdeckklappe (10) an der Schwenkklappe (14) gelenkig gelagert ist, und dass die erste Schwenkachse (S1) um eine zweite Schwenkachse (S2) verschwenkbar ist, die zu der ersten Schwenkachse (S1) beabstandet ist.

2. Lüftungsvorrichtung nach Anspruch 1,
**dadurch gekennzeichnet, dass**
die Abdeckklappe (10) eine erste Schwenkklappe ist, die an der zweiten Schwenkklappe (14) verschwenkbar befestigt ist.

3. Lüftungsvorrichtung nach zumindest einem der vorstehenden Ansprüche,
**dadurch gekennzeichnet, dass**
die Abdeckklappe (10) mehrere Durchströmungsöffnungen (12) aufweist, zwischen denen Stege (16) vorgesehen sind, welche in einer Schließstellung der Abdeckklappe (10) den ersten Durchströmungsquerschnitt verschließen.

4. Lüftungsvorrichtung nach zumindest einem der vorstehenden Ansprüche,
**dadurch gekennzeichnet, dass**
an drei Seiten des ersten Durchströmungsquerschnitts Gasführungswände (22-26) vorgesehen sind, die sich quer zu dem ersten Durchströmungsquerschnitt erstrecken.

5. Lüftungsvorrichtung nach Anspruch 4,
**dadurch gekennzeichnet, dass**
zwei der Gasführungswände (22, 26) dreieckig sind.

6. Lüftungsvorrichtung nach zumindest einem der vorstehenden Ansprüche,
**dadurch gekennzeichnet, dass**
diese als modulares Bauteil ausgebildet ist, das drei Komponenten umfasst, nämlich ein Basisteil (34), eine an dem Basisteil (34) gelenkig gelagerte Schwenkklappe (14) zum Verschließen des zweiten Durchströmungsquerschnitts, die den ersten Durchströmungsquerschnitt aufweist, und die Abdeckklappe (10), die an der Schwenkklappe (14) gelenkig gelagert ist.

7. Lüftungsvorrichtung nach zumindest einem der vorstehenden Ansprüche,
**dadurch gekennzeichnet, dass**
zumindest eine Klappe (10, 14) vorgesehen ist, die von Federn (30) und/oder Sollbruchelementen in ihrer Schließstellung gehalten ist.

8. Lüftungsvorrichtung nach zumindest einem der vorstehenden Ansprüche,
**dadurch gekennzeichnet, dass**
der erste Durchströmungsquerschnitt durch eine Vielzahl von Durchströmungsöffnungen gebildet ist.

9. Elektrische Schaltanlage mit zumindest einer Lüftungsvorrichtung nach zumindest einem der vorstehenden Ansprüche.

10. Elektrische Schaltanlage nach Anspruch 9 mit zumindest zwei Lüftungsvorrichtungen nach zumindest einem der Ansprüche 1 - 8, die in einen Entlüftungskanal derart eingebaut sind, dass sich die beiden Abdeckklappen gegensinnig schließen.

## Claims

1. A ventilation apparatus for a partition wall of an electrical switchgear, comprising a cover flap (10) which closes a first throughflow cross-section of the ventilation apparatus in the event of a pressure wave at one side of the partition wall, wherein a second throughflow cross-section is provided at the ventilation apparatus which is larger than the first throughflow cross-section and which opens in the event of a pressure wave at the other side of the partition wall; wherein a pivoting flap (14) is provided for closing the second throughflow cross-section and has the first throughflow cross-section formed by slits (12); and wherein the cover flap (10) is pivotable about a first pivot axis (S1) and the second throughflow cross-section is formed by the envelope of the pivoting flap (14),
**characterized in that**
the cover flap (10) is supported in an articulated manner at the pivoting flap (14); and **in that** the first pivot axis (S1) is pivotable about a second pivot axis (S2) which is spaced apart from the first pivot axis (S1).

2. A ventilation apparatus in accordance with claim 1,
**characterized in that**
the cover flap (10) is a first pivoting flap which is pivotably fastened to the second pivoting flap (14).

3. A ventilation apparatus in accordance with at least one of the preceding claims,
**characterized in that**
the cover flap (10) has a plurality of throughflow openings (12) between which webs (16) are provided which close the first throughflow cross-section in a closed position of the cover flap (10).

4. A ventilation apparatus in accordance with at least one of the preceding claims,
**characterized in that**
gas-conducting walls (22-26) which extend transversely to the first throughflow cross-section are provided at three sides of the first throughflow cross-section.

5. A ventilation apparatus in accordance with claim 4,
**characterized in that**
two of the gas-conducting walls (22, 26) are triangular.

6. A ventilation apparatus in accordance with at least one of the preceding claims,
**characterized in that**
it is configured as a modular component which comprises three components, namely a base part (34); a pivoting flap (14) for closing the second throughflow cross-section, which pivoting flap is supported in an articulated manner at the base part (34) and has the first throughflow cross-section; and the cover flap (10) which is supported in an articulated manner at the pivoting flap (14).

7. A ventilation apparatus in accordance with at least one of the preceding claims,
**characterized in that**
at least one flap (10, 14) is provided which is held in its closed position by springs (30) and/or elements having a predetermined breaking point.

8. A ventilation apparatus in accordance with at least one of the preceding claims,
**characterized in that**
the first throughflow cross-section is formed by a plurality of throughflow openings.

9. An electrical switchgear having at least one ventilation apparatus in accordance with at least one of the preceding claims.

10. An electrical switchgear in accordance with claim 9 having at least two ventilation apparatus in accordance with at least one of the claims 1 to 8 which are installed into a venting passage such that the two cover flaps close in opposite senses.

## Revendications

1. Dispositif d'aération pour une cloison d'une installation de commutation électrique, comportant un volet de recouvrement (10) qui, lors d'une onde de pression exercée sur un côté de la cloison, referme une première section transversale d'écoulement du dispositif d'aération,
dans lequel est prévue une seconde section transversale d'écoulement au niveau du dispositif d'aération, qui est plus grande que la première section transversale d'écoulement et qui s'ouvre lors d'une onde de pression exercée sur l'autre côté de la cloison,
dans lequel est prévu un volet de pivotement (14) pour refermer la seconde section transversale d'écoulement, qui présente la première section transversale d'écoulement formée par des fentes (12), et
le volet de recouvrement (10) est mobile en pivotement autour d'un premier axe de pivotement (S1) et la seconde section transversale d'écoulement est formée par l'enveloppante du volet de pivotement (14),
**caractérisé en ce que**
le volet de recouvrement (10) est monté en articulation sur le volet de pivotement (14), et **en ce que**
le premier axe de pivotement (S1) est mobile en pivotement autour d'un second axe de pivotement (S2) qui est écarté du premier axe de pivotement (S1).

2. Dispositif d'aération selon la revendication 1,
**caractérisé en ce que**
le volet de recouvrement (10) est un premier volet de pivotement qui est fixé de façon mobile en pivotement sur le second volet de pivotement (14).

3. Dispositif d'aération selon l'une au moins des revendications précédentes,
**caractérisé en ce que**
le volet de recouvrement (10) présente plusieurs orifices d'écoulement (12) entre lesquels sont prévues des barrettes (16) qui, dans une position de fermeture du volet de recouvrement (10), referment la première section transversale d'écoulement.

4. Dispositif d'aération selon l'une au moins des revendications précédentes,
**caractérisé en ce que**
des parois de guidage de gaz (22 à 26) sont prévues sur trois côtés de la première section transversale d'écoulement, qui s'étendent transversalement à la première section transversale d'écoulement.

5. Dispositif d'aération selon la revendication 4,
**caractérisé en ce que**
deux des parois de guidage de gaz (22, 26) sont triangulaires.

6. Dispositif d'aération selon l'une au moins des revendications précédentes,
**caractérisé en ce que**
celui-ci est réalisé sous forme de composant modulaire qui comprend trois parties que sont une partie de base (34), un volet de pivotement (14) monté en articulation sur la partie de base (34), destiné à refermer la seconde section transversale d'écoulement et présentant la première section transversale d'écoulement, et le volet de recouvrement (10) qui est monté en articulation sur le volet de pivotement (14).

7. Dispositif d'aération selon l'une au moins des revendications précédentes,
**caractérisé en ce que**
il est prévu au moins un volet (10, 14) qui est maintenu dans sa position de fermeture par des ressorts (30) et/ou par des éléments destinés à la rupture.

8. Dispositif d'aération selon l'une au moins des revendications précédentes,
**caractérisé en ce que**
la première section transversale d'écoulement est formée par une pluralité d'orifices d'écoulement.

9. Installation de commutation électrique comportant au moins un dispositif d'aération selon l'une au moins des revendications précédentes.

10. Installation de commutation électrique selon la revendication 9 comportant deux dispositifs d'aération selon l'une au moins des revendications 1 à 8, qui sont intégrés dans un canal d'aération de telle sorte que les deux volets de recouvrement se ferment en sens opposés.
